# EUROPÄISCHE PATENTANMELDUNG

(11) **EP 3 984 351 A1**
(43) Veröffentlichungstag der Anmeldung: **20.04.2022**
(21) Anmeldenummer: 20202340.4
(22) Anmeldetag: 16.10.2020
(51) Int. Cl.: A01G 9/02, A01G 24/20

(54) **FASSADENBEGRÜNUNG**

(71) Anmelder: wertec GmbH, 1100 Wien (AT)
(72) Erfinder: FRÜHAUF, Martin, 2700 Wiener Neustadt (BE)
(74) Vertreter: SONN Patentanwälte OG

(57) **Zusammenfassung**

Die Erfindung betrifft eine Fassadenplatte zur Fassadenbegrünung, aufweisend keimfähiges und/oder gekeimtes Pflanzenmaterial, wobei das keimfähige und/oder gekeimte Pflanzenmaterial auf und/oder in einem vorzugsweise plattenförmigen Formkörper vorliegt, wobei der Formkörper im Wesentlichen aus kompostierbarem Material besteht und zumindest ein Halteelement zur lösbaren Anbringung an eine mit einer Gebäudewand verbindbare Unterkonstruktion aufweist. Die Erfindung betrifft weiters eine Unterkonstruktion zum Anbringen von Fassadenplatten, ein Fassadensystem zur Fassadenbegrünung und ein Gebäude mit Fassadenbegrünung.

## Beschreibung

Fassadenbegrünungen können dem Schutz und der Verschönerung von Bauwerken dienen, ebenso wie der Verbesserung der Lebensqualität beispielsweise in dicht verbauten Gebieten. Unter anderem können Fassadenbegrünungen das Mikroklima verbessern und einen kühlenden Effekt haben.

Systeme zur Fassadenbegrünung sind grundsätzlich aus dem Stand der Technik bekannt. Beispielsweise offenbart die US 2008/0110086 A1 ein Modul zum Platzieren von Pflanzen an vertikalen Wänden. Die WO 2012/000063 A1 offenbart eine modulare Vegetationsanordnung aufweisend ein Pflanzenwachstumsmedium und eine äußere Schicht, welche von Pflanzenwachstum durchdrungen werden kann. Die WO 2014/076077 A1 offenbart einen Polyurethanweichschaumstoff enthaltend keimfähige und/oder gekeimte Pflanzensamen welcher unter anderem zur Begrünung von Fassaden eingesetzt werden kann.

Die WO 2011/050778 A1 offenbart ein begrüntes Bauelement mit einer unteren Basisplatte, die als Dämmplatte ausgebildet ist, und mit einer oberen Vegetationsschicht mit niederen und/oder höheren Pflanzen. Zwischen der Dämmplatte und der Vegetationsschicht ist eine pflanzenverträgliche Klebeschicht angeordnet.

In der Praxis hat sich gezeigt, dass die aus dem Stand der Technik bekannten Systeme zur Fassadenbegrünung Nachteile ausweisen. So ist beispielsweise die Instandhaltung bzw. Reparatur dieser Systeme oft aufwendig.

Die Aufgabe der vorliegenden Erfindung besteht darin, zumindest einzelne Nachteile des Standes der Technik zu lindern bzw. zu beseitigen. Die Erfindung setzt sich insbesondere zum Ziel, Systeme zur Fassadenbegrünung bereitzustellen, welche eine einfachere Instandhaltung und/oder einen flexibleren Einsatz ermöglichen.

Die Erfindung stellt daher eine Fassadenplatte zur Fassadenbegrünung zur Verfügung, aufweisend keimfähiges und/oder gekeimtes Pflanzenmaterial, wobei das keimfähige und/oder gekeimte Pflanzenmaterial auf und/oder in einem vorzugsweise plattenförmigen Formkörper vorliegt, wobei der Formkörper im Wesentlichen aus kompostierbarem Material besteht und zumindest ein Halteelement zur lösbaren Anbringung an eine mit einer Gebäudewand verbindbare Unterkonstruktion aufweist.

In einem weiteren Aspekt stellt die Erfindung eine Unterkonstruktion zum Anbringen von Fassadenplatten zur Verfügung, aufweisend eine Tragplatte mit einer Rückseite zur Befestigung an eine Gebäudewand und einer Vorderseite aufweisend zumindest ein Trageelement zur lösbaren Anbringung einer Fassadenplatte, wobei an der Vorderseite zumindest ein Bewässerungsschlauch zur Wasserversorgung einer Fassadenplatte angebracht ist.

In einem weiteren Aspekt betrifft die Erfindung ein Fassadensystem zur Fassadenbegrünung, umfassend zumindest eine erfindungsgemäße Fassadenplatte und zumindest eine erfindungsgemäße Unterkonstruktion.

Ein weiterer Aspekt der Erfindung betrifft ein Gebäude mit Fassadenbegrünung, aufweisend zumindest eine mit einer Wand des Gebäudes verbundene erfindungsgemäße Unterkonstruktion und zumindest eine an der Unterkonstruktion angebrachten erfindungsgemäßen Fassadenplatte.

Die Erfindung weist eine Reihe von Vorteilen gegenüber bekannten Fassadenbegrünungen auf. Die lösbaren Anbringung des Formkörpers an eine Unterkonstruktion ermöglicht einen einfachen Austausch der das Pflanzenmaterial aufweisenden Fassadenplatte. Vorzugsweise kann der Formkörper von einer Unterkonstruktion gelöst werden und wieder angebracht werden, ohne dabei beschädigt zu werden. Es ist somit beispielsweise möglich, die Fassadenplatte auszutauschen, wenn diese durch äußere Einflüsse beschädigt ist oder das Pflanzenmaterial beeinträchtigt ist. Ebenfalls ist es problemlos möglich, Fassaden durch den Austausch mit Fassadenplatten aufweisend unterschiedliche Pflanzenarten flexibel neu zu gestalten. Dadurch, dass der Formkörper im Wesentlichen aus kompostierbarem Material besteht, kann ein nicht mehr benötigter Formkörper bzw. ein beschädigter Formkörper auf einfache und umweltschonende Art entsorgt werden. Die lösbare Anbringung des Formkörpers an der Unterkonstruktion ermöglicht außerdem eine einfache Wartung bzw. Reparatur der Unterkonstruktion, beispielsweise einer Wasserversorgung, wie sie im Fall der erfindungsgemäßen Unterkonstruktion vorgesehen ist.

Auch wenn jede geeignete Unterkonstruktion verwendet werden kann, ist es besonders vorteilhaft, wenn die erfindungsgemäße Fassadenplatte in Kombination mit der erfindungsgemäßen Unterkonstruktion eingesetzt wird. Insbesondere sieht die erfindungsgemäße Unterkonstruktion zumindest einen Bewässerungsschlauch zur Wasserversorgung einer Fassadenplatte vor. Dadurch werden besonders günstige Bedingungen für das Pflanzenwachstum ermöglicht, insbesondere beim Einsatz in Gebieten mit wenig Niederschlag und/oder geringer Luftfeuchtigkeit.

Es hat sich als besonders günstig erwiesen, dass die Fassadenplatte im Wesentlichen aus kompostierbarem Material besteht. Wie hierein verwendet wird "kompostierbar" vorzugsweise als kompostierbar nach Norm DIN EN 13432:2000 12 oder ASTM D6400-19 (ASTM International, West Conshohocken, PA, 2019, www.astm.org) verstanden. Vorzugsweise ist der Formkörper bzw. die Fassadenplatte mindestens zu 90 Gew.-%, bevorzugt mindestens zu 95 Gew.-%, mehr bevorzugt mindestens zu 98 Gew.-%, noch mehr bevorzugt mindestens zu 99 Gew.-%, am meisten bevorzugt vollständig kompostierbar. Besonders bevorzugt bedeutet kompostierbar hierin heimkompostierbar, insbesondere heimkompostierbar nach dem australischen Standard AS 5810 (2010). Dies ermöglicht eine besonders einfache Entsorgung nicht mehr benötigter und/oder beschädigter Fassadenplatten.

Um die Kompostierbarkeit und die einfache Entsorgung sicherzustellen, ist es bevorzugt, wenn die Fassadenplatte keine metallischen und/oder kunststoffhaltigen Werkstücke enthält, insbesondere keine Hilfskonstruktionen und/oder Befestigungselemente aus Metall und/oder Kunststoff.

Im Rahmen der Erfindung ist es bevorzugt, dass das kompostierbare Material Faserstoffmaterial, vorzugsweise Sekundärfaserstoffmaterial, insbesondere Altpapierstoffmaterial, am meisten bevorzugt geformte Pulpe enthält. Besonders bevorzugt ist es, dass der Formkörper zumindest zu 10 Gew.-%, bevorzugt mindestens zu 20 Gew.-%, mehr bevorzugt zumindest zu 40 Gew.-%, noch mehr bevorzugt zumindest zu 60 Gew.-%, am meisten bevorzugt zumindest zu 80 Gew.-% aus Faserstoffmaterial, vorzugsweise Sekundärfaserstoffmaterial, insbesondere Altpapierstoffmaterial, am meisten bevorzugt geformte Pulpe, besteht. Geformte Pulpe, teilweise auch als Faserguss oder Faserform bezeichnet, ist ein umweltfreundlicher Werkstoff, welcher beispielsweise aus recyceltem Karton bzw. Altpapier, und/oder nachwachsenden Faserstoffen wie Heu, Stroh, Hanf oder ähnlichem Zellstoffmaterial hergestellt werden kann. Der Fachmann ist mit der Herstellung von Formköpern aus geformter Pulpe oder aus anderem Faserstoffmaterial vertraut. In einem typischen Herstellungsprozess kann beispielsweise Papier- oder Kartonabfall, bzw. anderes Faserstoffmaterial, in einem Pulper mit Wasser aufgelöst werden, sodass ein Faserstoff-Dickstoff erhalten wird. Aus dem Faserstoff-Dickstoff kann durch Gitterwerkzeuge die gewünschte Form des Fasergusses über ein Vakuum angesaugt werden, wobei Fasern durch die Siebe zurückgehalten werden und das Formteil sich somit aufbaut. Mittels einer Gegenform und Vakuum können die Formteile vom Sieb abgenommen werden und auf einer Trocknungsstrecke getrocknet werden. Aber auch andere Herstellungsverfahren, beispielsweise ein einfaches Pressen und Trocknen der Pulpe in einer entsprechenden Form, sind möglich.

Im Zusammenhang mit der Erfindung ist es bevorzugt, dass das kompostierbare Material bzw. der Formkörper wasserdurchlässig ist. Dies ermöglicht eine effiziente Wasserversorgung durch die erfindungsgemäße Unterkonstruktion mit Bewässerungsschlauch und erhöht dadurch die Unabhängigkeit von Umweltbedingungen, wie Luftfeuchtigkeit oder Regen. Vorzugsweise ist das kompostierbare Material bzw. der Formkörper wasseraufnahmefähig. Insbesondere ist es bevorzugt, dass das kompostierbare Material bzw. der Formkörper einen Cobb-Wert nach ISO 535:2014 (Cobb 60s) von mindestens 0,1 g/m², vorzugsweise mindestens 1 g/m², insbesondere mindestens 5 g/m² hat.

Vorzugsweise ist das zumindest eine Halteelement einstückig mit dem Formkörper ausgebildet. Dies ist besonders vorteilhaft, da bei der Herstellung des Formkörpers keine separaten Halteelemente am Formkörper angebracht werden müssen. Das Halteelement kann sich somit aus der Gestalt des Formkörpers selbst ergeben. Insbesondere ist es bevorzugt, dass das zumindest eine Halteelement durch eine Vertiefung oder Erhebung am Formkörper gebildet ist. Vorzugsweise ist das Halteelement eine höckerförmige bzw. noppenförmige Vertiefung oder Erhebung. Beispielsweise kann die Vertiefung oder Erhebung eine runde oder eckige Grundfläche aufweisen. Beispielsweise kann das Halteelement eine kegelstumpfförmige, zylindrische, kugelförmige, quaderförmige, oder pyramidenstumpfförmige Vertiefung oder Erhebung sein. Die Vertiefung oder Erhebung kann dabei einen Form- oder Reibschluss mit einer entsprechenden an einer Unterkonstruktion vorgesehenen Erhebung oder Vertiefung zur lösbaren Anbringung ermöglichen.

Im Rahmen der Erfindung ist es bevorzugt, dass der Formkörper zumindest zwei, vorzugsweise zumindest vier, noch mehr bevorzugt zumindest acht Halteelemente aufweist. Die Halteelemente können dabei gleichartig oder verschiedenartig ausgestaltet sein. Besonders bevorzugt ist es, dass die Halteelemente ein Halteprofil, beispielsweise ähnlich der Form eines Eierkartons, bilden.

Vorzugsweise ist der Formkörper plattenförmig ausgestaltet. Insbesondere ist es bevorzugt, dass der Formkörper im Wesentlichen rechteckig dimensioniert ist. Dies ermöglicht eine einfache Abdeckung großer Flächen, da mehrere erfindungsgemäße Fassadenplatten in Reihen und Spalten angeordnet werden können, ohne dass große Bereiche zwischen den Fassadenplatten frei bleiben müssen. Vorzugsweise schließen die Außenkanten des Formkörpers eine Fläche von zwischen 0,05 und 20 m², bevorzugt zwischen 0,1 und 10 m², mehr bevorzugt zwischen 0,2 und 5 m², noch mehr bevorzugt zwischen 0,4 und 2,5 m², am meisten bevorzugt zwischen 0,8 und 1,25 m² ein. Der Formkörper kann daher vorzugsweise eine Fläche von zwischen 0,05 und 20 m², bevorzugt zwischen 0,1 und 10 m², mehr bevorzugt zwischen 0,2 und 5 m², noch mehr bevorzugt zwischen 0,4 und 2,5 m², am meisten bevorzugt zwischen 0,8 und 1,25 m² bedecken.

In einer bevorzugten Ausführungsform enthält das kompostierbare Material Zuschlagsstoffe, vorzugsweise ausgewählt aus der Gruppe bestehend aus Pflanzennährstoffen, wasserspeichernden und/oder wasserregulierenden Medien, Flammschutzmittel und festigkeitserhöhenden Füllstoffen. Besonders bevorzugt ist es, wenn das kompostierbare Material Pflanzennährstoffe enthält, vorzugsweise einen NPK-Dünger und/oder NPK-Verbindungen. NPK-Dünger sind Mehrnährstoffdünger, welche Stickstoff (N), Phosphat (P) und Kalium (K) enthalten. NPK-Verbindungen sind N-, P-, oder K-haltige Inhaltsstoffe von NPK-Düngern. Vorzugsweise sind die Pflanzennährstoffe ausgewählt aus der Gruppe bestehend aus Ammoniumsulfat, Ammoniumphosphat, Harnstoff, Kaliumphosphate und Kaliumsulfat; und/oder Spurenelemente, insbesondere ausgewählt aus der Gruppe bestehend aus Mg, Ca, Fe, Zn, Mn, Cu, B, insbesondere in Form von anorganischen oder organischen Salzen. Das Vorsehen von Pflanzennährstoffen im Formkörper ermöglicht ein besonders effizientes Pflanzenwachstum.

In einer weiteren bevorzugten Ausführungsform enthält das kompostierbare Material wasserspeichernde und/oder wasserregulierende Medien, vorzugsweise Zeolithe. Dadurch kann eine besonders gleichmäßige Wasserversorgung des Pflanzenmaterials sichergestellt werden.

In einer weiteren bevorzugten Ausführungsform enthält das kompostierbare Material Flammschutzmittel, vorzugsweise anorganische Flammschutzmittel, insbesondere Magnesium- oder Aluminiumverbindungen oder Phosphate. Dadurch kann das Brandrisiko eines Gebäudes, welches eine erfindungsgemäße Fassadenplatte aufweist, reduziert werden.

In einer weiteren bevorzugten Ausführungsform enthält das kompostierbare Material festigkeitserhöhende Füllstoffe, vorzugsweise natürliche Silikate, insbesondere Zeolith, Bentonit, Kaolin, oder Tone; oder andere natürliche Mineralien, insbesondere Gips, Apatit, oder organische Fasern, insbesondere Baumwolle, Hanf, oder Jute. Durch das Vorsehen derartiger Füllstoffe kann eine besonders hohe Formstabilität des Formkörpers erreicht werden. Insbesondere ist es bevorzugt, dass die festigkeitserhöhenden Füllstoffe eine Gitterstruktur bilden, insbesondere eine quadratische oder wabenförmig hexagonale Gitterstruktur, in welche das übrige kompostierbare Material eingebettet ist.

Erfindungsgemäß kann das keimfähige und/oder gekeimte Pflanzenmaterial auf und/oder in einem Formkörper vorliegen. In einer bevorzugten Ausführungsform ist das keimfähige und/oder gekeimte Pflanzenmaterial in das kompostierbare Material eingebettet. Anders ausgedrückt, ist das keimfähige und/oder gekeimte Pflanzenmaterial vorzugsweise mit dem kompostierbaren Material vermischt. Um dies zu erreichen, kann das Pflanzenmaterial dem Formkörper im Zuge der Herstellung beigemischt werden. Beispielsweise kann das Pflanzenmaterial einer Pulpe beigemischt werden, aus welcher der Formkörper z.B. durch Pressen und Trocknen in der Folge gebildet wird. Im Zuge des Wachstums kann das Pflanzenmaterial den Formkörper durchdringen und so aus dem Inneren des Formkörpers an dessen Oberfläche gelangen. Diese Ausführungsform hat den Vorteil, dass kein separater Schritt für das Auf- oder Einbringen des Pflanzenmaterials auf oder in den Formkörper notwendig ist.

In einer anderen, ebenfalls bevorzugten Ausführungsform, ist das keimfähige und/oder gekeimte Pflanzenmaterial auf die Oberfläche des Formkörpers aufgebracht, vorzugsweise aufgesprüht oder auflackiert. Dies hat unter anderem den Vorteil, dass der Formkörper unabhängig von der Art des Pflanzenmaterials hergestellt werden kann und der hergestellte Formkörper so in Kombination mit unterschiedlichen Pflanzenarten verwendet werden kann.

In einer weiteren bevorzugten Ausführungsform weist der Formkörper eine Schicht enthaltend Salze von Fettsäuren auf, bevorzugt Calcium- oder Magnesiumsalze von Fettsäuren, besonders bevorzugt von natürlichen Fettsäuren, insbesondere ausgewählt aus Calcium- und Magensiumstearat und Calcium- und Magnesiumoleat. Vorzugsweise erstreckt sich diese Schicht über zumindest 50%, vorzugsweise zumindest 75%, mehr bevorzugt zumindest zu 90%, noch mehr bevorzugt zumindest 95%, am meisten bevorzugt über die gesamte Oberfläche des Formkörpers. Eine derartige Schicht kann wasserabweisend wirken, um übermäßigen Wasserzutritt durch Regen zu vermindern.

Im Zusammenhang mit der Erfindung handelt es sich bei dem keimfähigen und/oder gekeimten Pflanzenmaterial vorzugsweise um keimfähige und/oder gekeimte Pflanzensamen. Keimfähig, wie hierin verwendet, bedeutet vorzugsweise, dass das Pflanzenmaterial bzw. der Pflanzensamen die Fähigkeit besitzt, einen Keimling zu bilden. Die Keimfähigkeit kann beispielsweise durch Lagerung eines befeuchteten Formkörpers, auf oder in welchem das Pflanzenmaterial vorliegt, bei 25 °C für 28 Tage und nachfolgende Überprüfung, ob das Pflanzenmaterial bzw. der Pflanzensamen gekeimt hat, überprüft werden. Alternativ dazu kann die Keimfähigkeit auch nach den Vorschriften der ISTA (International Seed Testing Association, International Rules for Seed Testing 2020) durchgeführt werden. Vorzugsweise weist die Fassadenplatte zumindest einen keimfähigen Pflanzensamen auf. Insbesondere ist es bevorzugt, dass die Fassadenplatte Pflanzensamen mit einer Keimfähigkeit von mindestens 1% (1% der Pflanzensamen besitzen die Fähigkeit einen Keimling zu bilden), vorzugsweise mindestens 10%, noch mehr bevorzugt mindestens 25%, insbesondere mindestens 50% auf, wobei die Keimfähigkeit vorzugsweise nach den International Rules for Seed Testing 2020 (ISTA) bestimmt wird. Bei dem gekeimten Pflanzenmaterial bzw. dem gekeimten Pflanzensamen kann es sich um eine Pflanze jeglichen Entwicklungsstadiums handeln, beispielsweise um einen Keimling. Vorzugsweise ist das gekeimte Pflanzenmaterial bzw. der gekeimte Pflanzensamen lebensfähig, insbesondere wachstumsfähig. Die Wachstumsfähigkeit kann beispielsweise dadurch bestimmt werden, dass ein angefeuchteter Formkörper, auf welchem das Pflanzenmaterial vorliegt, bei 25 °C für 28 Tage gelagert wird und nachfolgend überprüft wird, ob ein Pflanzenwachstum stattgefunden hat. Vorzugsweise wird die Wachstumsfähigkeit unter denselben Bedingungen bestimmt, wie sie in den Rules for Seed Testing 2020 (ISTA) für die Keimfähigkeit festgelegt sind.

In einer besonders bevorzugten Ausführungsform weist das keimfähige und/oder gekeimte Pflanzenmaterial ein Moos auf. Vorzugsweise ist das Moos ausgewählt aus Moosen der Gattungen Homalothecium, Abietinella und Hypnum, insbesondere ausgewählt aus Homalothecium lutescens (Gelbliches Seidenmoos), Homalothecium sericeum (Seidenmoos), Abietinella abietina (Echtes Tannenmoos) und Hypnum cupressiforme (Zypressenschlafmoos). Ebenfalls bevorzugt sind Tortula muralis (Mauer-Drehzahnmoos), Bryum argenteum (Silber-Birnmoos) und/oder Syntrichia ruralis (Dach-Drehzahnmoos).

In einer weiteren bevorzugten Ausführungsform weist das keimfähige und/oder gekeimte Pflanzenmaterial einen Farn auf. Vorzugsweise ist der Farn ein Tüpfelfarn oder ein Streifenfarn, insbesondere der Gewöhnliche Tüpfelfarn (Polypodium vulgare) oder der Mauer-Streifenfarn (Asplenium ruta-muraria).

Als besonders vorteilhaft hat es sich herausgestellt, wenn das keimfähige und/oder gekeimte Pflanzenmaterial ein Moos und einen Farn aufweist. Moose und Farne haben jeweils unterschiedliche Vorteile, welche sich gegenseitig ergänzen bzw. verstärken. So können Farne die Wasseraufnahme besonders gut über das Wurzelsystem bewerkstelligen, während Moose Wasser vor allem gut über die Blätter aufnehmen können, z.B. Luftfeuchtigkeit oder fließendes Wasser. Die Kombination der beiden Pflanzenarten hat darüber hinaus den Vorteil, dass die durch das Wurzelsystem mit Wasser versorgten Farnwedel die mikroklimatischen Verhältnisse für das Mooswachstum verbessern können, was eine günstige Wechselwirkung zwischen Moosen und Farnen im Zusammenhang mit der vorliegenden Erfindung ermöglicht.

In einer weiteren bevorzugten Ausführungsform weist das keimfähige und/oder gekeimte Pflanzenmaterial ein Mastkraut, insbesondere das Niederliegende Mastkraut (Sagina procumbens) auf. Mastkräuter können Moosen optisch ähneln und können Wasser besonders gut über das Wurzelsystem aufnehmen, was für die Verwendung im Zusammenhang mit dem erfindungsgemäßen Fassadensystem ebenfalls vorteilhaft ist. Die erfindungsgemäße Unterkonstruktion, bzw. die Rückseite der Tragplatte der erfindungsgemäßen Unterkonstruktion, ist zur Befestigung an eine Gebäudewand, vorzugsweise an eine Außenwand, insbesondere an eine Mauer geeignet. Vorzugsweise ist die Gebäudewand eine im Wesentlichen senkrechte Gebäudewand.

Im Zusammenhang mit der erfindungsgemäßen Unterkonstruktion ist das zumindest eine Trageelement vorzugsweise durch eine Erhebung oder Vertiefung gebildet. Alle hierin beschriebenen bevorzugten Ausführungsformen des Halteelements der Fassadenplatte sind auch als Ausführungsformen des Trageelements bevorzugt. Insbesondere kann es sich bei dem Trageelement um eine höckerförmige bzw. noppenförmige Vertiefung oder Erhebung handeln. Beispielsweise kann die Vertiefung oder Erhebung eine runde oder eckige Grundfläche aufweisen. Beispielsweise kann das Trageelement eine kegelstumpfförmige, zylindrische, kugelförmige, quaderförmige, oder pyramidenstumpfförmige Vertiefung oder Erhebung sein. Die Erhebung oder Vertiefung kann einen Form- oder Reibschluss mit einer entsprechenden an einer Fassadenplatte vorgesehenen Vertiefung oder Erhebung zur lösbaren Anbringung ermöglichen.

Vorzugsweise weist die Vorderseite der Tragplatte zumindest zwei, vorzugsweise zumindest vier, noch mehr bevorzugt zumindest acht Trageelemente auf. Vorzugsweise bilden die Trageelemente ein Tragprofil, beispielsweise ähnlich der Form eines Eierkartons.

Der Bewässerungsschlauch wir vorzugsweise durch das mindestens eine Trageelement (bzw. die mindestens zwei, mindestens vier, oder mindestens acht Trageelemente) gehalten. Wenn es sich bei dem Trageelement beispielsweise um eine höckerförmige bzw. noppenförmige Erhebung handelt, kann der Bewässerungsschlauch auf dieser Erhebung aufliegen und von dieser gehalten werden. Der Bewässerungsschlauch kann allerdings auch beispielsweise in einer dafür vorgesehenen Vertiefung in der Trageplatte verlegt sein.

Bei dem Bewässerungsschlauch kann es sich im Zusammenhang um jede Art von Wasserleitung handeln, welche eine Zufuhr von Wasser zur Vorderseite der Trageplatte ermöglicht. Vorzugsweise handelt es sich bei dem Bewässerungsschlauch um eine Wasserleitung, welche zumindest eine, vorzugsweise zumindest zwei, insbesondere zumindest zehn zusätzliche Öffnungen zwischen Anfang und Ende der Leitung aufweisen. Diese Öffnungen ermöglichen einen Wasseraustritt an Stellen entlang der Wasserleitung, was eine räumlich verteilte Wasserversorgung einer Fassenplatte ermöglicht. Besonders bevorzugt sind Bewässerungsschläuche, wie sie beispielsweise bei der Gartenbewässerung zum Einsatz kommen. Vorzugsweise ist der Bewässerungsschlauch ein Perlschlauch oder ein Tropfschlauch. Ein Perlschlauch ist typischerweise ein Schlauch aufweisend einen Schlauchmantel aus porösem Material, durch welches Wasser nach außen treten kann. Ein Tropfschlauch ist üblicherweise ein Schlauch, welcher einen Mantel mit Löchern aufweist, durch welche ebenfalls Wasser nach außen treten kann. Der Bewässerungsschlauch ist vorteilhafterweise aus Kunststoff gefertigt, er kann aber auch aus anderen Materialien, beispielsweise aus Metall, bestehen.

In einer bevorzugten Ausführungsform ist der Bewässerungsschlauch mit einem Dosiersystem zur Zudosierung eines Antikalkmittels verbunden. Dies ist vorteilhaft, um Verkalkungen im Bewässerungsschlauch vorzubeugen bzw. zu reduzieren. Als Antikalkmittel besonders bevorzugt sind biologisch bzw. ökologisch verträgliche Antikalkmittel, insbesondere Carboxymethylinulin. Vorzugsweise weist das Dosiersystem daher ein Antikalkmittel, insbesondere Carboxymethylinulin, auf.

In einer bevorzugten Ausführungsform ist die Tragplatte im Wesentlichen rechteckig dimensioniert. Dies ermöglicht eine einfache Abdeckung großer Flächen einer Gebäudewand, da mehrere erfindungsgemäße Unterkonstruktionen in Reihen und Spalten angeordnet werden können, ohne dass große Freiräume zwischen den Tragplatten verbleiben. Vorzugsweise schließen die Außenkanten der Tragplatte eine Fläche von zwischen 0,05 und 20 m², bevorzugt zwischen 0,1 und 10 m², mehr bevorzugt zwischen 0,2 und 5 m², noch mehr bevorzugt zwischen 0,4 und 2,5 m², am meisten bevorzugt zwischen 0,8 und 1,25 m² ein.

Es hat sich als günstig erwiesen, wenn das mindestens eine Trageelement (bzw. die mindestens zwei, mindestens vier, oder mindestens acht Trageelemente) aus Kunststoff, vorzugsweise aus einem wasserdichten Kunststoff, besonders bevorzugt aus Polystyrol (PS), insbesondere aus recycliertem PS, besteht. Insbesondere ist es günstig, wenn die Tragplatte eine Schicht aus Kunststoff, vorzugsweise aus einem wasserdichten Kunststoff, besonders bevorzugt aus PS, insbesondere aus recycliertem PS aufweist, vorzugsweise wobei die Schicht aus Kunststoff die Vorderseite der Tragplatte bildet. Vorzugsweise ist das Trageelement (bzw. sind die Trageelemente) einstückig mit dieser Schicht ausgebildet. Diese Schicht kann als Wassersperre dienen, die den Eintritt von Wasser zur Gebäudewand, beispielsweise dem Mauerwerk, verhindert.

In einer besonders bevorzugten Ausführungsform weist die Tragplatte eine Wärmedämmschicht, vorzugsweise eine Wärmedämmschicht aus expandiertem Polystyrol (EPS), auf. Vorzugsweise ist die Wärmedämmschicht an der Rückseite der Tragplatte angeordnet, besonders bevorzugt bildet die Wärmedämmschicht die Rückseite der Tragplatte. Dadurch wird eine Wärmedämmung eines Gebäudes ermöglicht. Die Tragplatte ist somit vorzugsweise als Wärmedämmplatte ausgestaltet.

In einer bevorzugten Ausführungsform weist die Wärmedämmschicht weitere Trageelemente auf und weist die Schicht aus Kunststoff darauf abgestimmte Halteelemente auf, wobei die Trageelemente der Wärmedämmschicht und die Halteelemente der Schicht aus Kunststoff vorzugsweise lösbar miteinander verbindbar sind. Dies ermöglicht es, die Schicht aus Kunststoff lösbar an der Wärmedämmschicht anzubringen. Darüber hinaus ermöglicht dies eine einfache Herstellung, da die Schicht aus Kunststoff nicht mit der Wärmedämmschicht verklebt oder auf andere Art und Weise befestigt werden muss. Die Schicht aus Kunststoff kann daher gleichzeitig Halteelemente für die Verbindung mit der Wärmedämmschicht als auch Trageelemente zur lösbaren Anbringung einer Fassadenplatten aufweisen. Alle hierin beschriebenen Ausführungsformen der Halteelemente des Formkörpers sowie der Trageelement der Tragplatte sind auch bevorzugt im Zusammenhang mit den Halteelementen der Schicht aus Kunststoff sowie den Trageelementen der Wärmedämmschicht.

In einer weiteren bevorzugten Ausführungsform weist die Unterkonstruktion zumindest einen Feuchtigkeitssensor und/oder einen Temperatursensor auf. Dies ermöglicht es, eine angemessene Wasserversorgung einer an der Unterkonstruktion angebrachten Fassadenplatte sicherzustellen. In einer besonders bevorzugten Ausführungsform weist die Unterkonstruktion zusätzlich eine Regeleinheit zur Regulierung des Wasserzuflusses durch den Bewässerungsschlauch auf. Dies ist insbesondere in Kombination mit einem Feuchtigkeitssensor und/oder einem Temperatursensor von Vorteil, da die Regeleinheit die Wasserzufuhr automatisch an die jeweiligen Umweltbedingungen (z.B. Temperatur und/oder Feuchtigkeit) anpassen kann.

Das erfindungsgemäße Fassadensystem zu Fassadenbegrünung umfasst zumindest eine erfindungsgemäße Fassadenplatte und zumindest eine erfindungsgemäße Unterkonstruktion. Alle hierin beschriebenen bevorzugten Ausführungsformen der Fassadenplatte und der Unterkonstruktion sind auch im Zusammenhang mit dem Fassadensystem bevorzugt. Vorzugsweise umfasst das Fassadensystem mindestens zwei, vorzugsweise mindestens vier erfindungsgemäße Fassadenplatten und mindestens zwei, vorzugsweise mindestens vier erfindungsgemäße Unterkonstruktionen.

Vorzugsweise sind das Halteelement der Fassadenplatte und das Trageelement der Unterkonstruktion aufeinander abgestimmt. Insbesondere ist es bevorzugt, dass die Fassadenplatte lösbar an der Unterkonstruktion anbringbar ist. Es ist daher bevorzugt, dass das Halteelement des Formkörpers und das Trageelement der Unterkonstruktion lösbar verbindbar sind. Insbesondere ist es bevorzugt, dass das Halteelement des Formkörpers und das Trageelement der Unterkonstruktion formschlüssig und/oder reibschlüssig verbindbar sind.

Das erfindungsgemäße Gebäude zur Fassadenbegrünung weist zumindest eine erfindungsgemäße Fassadenplatte und zumindest eine erfindungsgemäße Unterkonstruktion auf. Alle hierin beschriebenen bevorzugten Ausführungsformen der Fassadenplatte und der Unterkonstruktion sind auch im Zusammenhang mit dem erfindungsgemäßen Gebäude bevorzugt. Vorzugsweise weist das Gebäude mindestens zwei, vorzugsweise mindestens vier erfindungsgemäße Fassadenplatten und mindestens zwei, vorzugsweise mindestens vier erfindungsgemäße Unterkonstruktionen auf.

Bei der Wand des Gebäudes handelt es sich vorzugsweise um eine Außenwand. Vorzugsweise handelt es sich dabei um eine Mauer. Vorzugsweise ist die Wand eine im Wesentlichen senkrechte Wand.

Im Zusammenhang mit dem Gebäude gemäß der Erfindung ist die die Fassadenplatte vorzugsweise lösbar an der Unterkonstruktion angebracht. Es ist daher bevorzugt, dass das Halteelement des Formkörpers und das Trageelement der Unterkonstruktion lösbar verbunden sind. Insbesondere ist es bevorzugt, dass das Halteelement des Formkörpers und das Trageelement der Unterkonstruktion formschlüssig und/oder reibschlüssig verbunden sind.

Im Folgenden wird die Erfindung anhand von bevorzugten, nicht einschränkenden Ausführungsformen unter Bezugnahme auf die Zeichnungen näher erläutert.
Figur 1 zeigt ein erfindungsgemäßes Fassadensystem mit einer Fassadenplatte und einer Unterkonstruktion.
Figur 2 zeigt eine Gebäudewand mit Fassadenbegrünung, aufweisend das Fassadensystem aus Fig. 1, wobei die Fassadenplatte an der Unterkonstruktion angebracht ist.
Figuren 3A bis 3C zeigen erfindungsgemäße Fassadensysteme mit verschiedene Ausführungsformen von Halte- und Trageelementen.
Figur 4 zeigt eine perspektivische Ansicht der Tragplatte einer Ausführungsform der erfindungsgemäßen Unterkonstruktion.

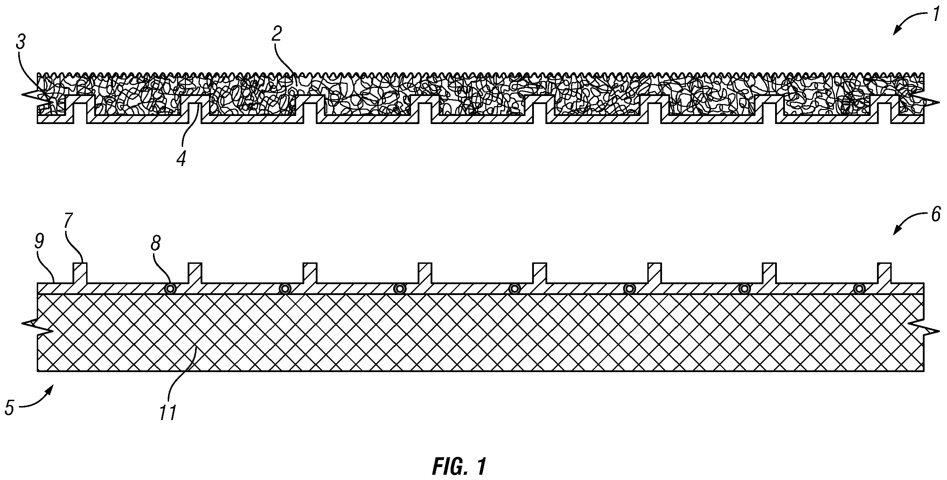

In Fig. 1 ist ein erfindungsgemäßes Fassadensystem mit einer Fassadenplatte 1 und einer Unterkonstruktion 5 gezeigt. Die Fassadenplatte 1 weist einen plattenförmigen Formkörper 3 mit Haltelementen 4 auf. In der gezeigten Ausführungsform sind die Halteelemente 4 durch Vertiefungen am Formkörper 3 gebildet. Die Halteelemente 4 sind einstückig mit dem Formkörper 3 ausgebildet. Die Fassadenplatte 1 weist weiters keimfähiges und/oder gekeimtes Pflanzenmaterial 2 auf, welches auf dem plattenförmigen Formkörper 3 vorliegt. Der Formköper 3 dient dabei als Substrat für das Pflanzenwachstum, wobei das keimfähige und/oder gekeimte Pflanzenmaterial 2 beispielsweise auf den Formkörper 3 aufgesprüht oder auflackiert, oder dem kompostierbaren Material bei der Herstellung des Formkörpers beigemischt wurde. Die Unterkonstruktion 5 weist eine Tragplatte 6 mit durch Erhebungen gebildeten Trageelementen 7 auf. Die Trageelemente 7 sind an einer Schicht 9 aus Kunststoff ausgebildet. Die Trageelemente 7 der gezeigten Ausführungsform sind auf die Halteelemente 4 der Fassadenplatte 1 abgestimmt, sodass die Fassadenplatte 1 lösbar an der Unterkonstruktion 5 angebracht werden kann, wobei eine lösbare form- und/oder reibschlüssige Verbindung zwischen den Haltelementen 4 und den Trageelementen 7 entsteht. Die Unterkonstruktion 5 weist darüber hinaus einen Tropfschlauch 8 auf, welcher in der gezeigten Ausführungsform in einer dafür vorgesehenen Ausnehmung in der Tragplatte verlegt ist. Wasser aus dem Tropfschlauch 8 kann den Formköper 3 durchdringen und so das Pflanzenmaterial mit ausreichender Feuchtigkeit versorgen. Eine Wärmedämmschicht 11 bildet die Rückseite der Tragplatte 6.

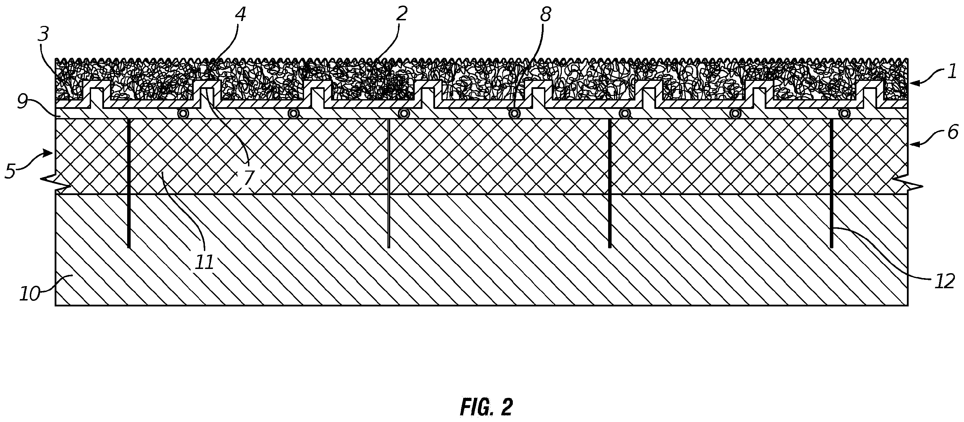

Fig. 2 zeigt die Gebäudewand 10 einer Ausführungsform des erfindungsgemäßen Gebäudes mit dem in Fig. 1 gezeigten Fassadensystem. Die Unterkonstruktion 5 ist an der Gebäudewand 10 durch Befestigungsmittel 12, beispielsweise Dübel und/oder Schrauben, befestigt. Die Fassadenplatte 1 ist lösbar an der Unterkonstruktion 5 angebracht, wobei die Halteelemente 4 des Formkörpers 3 form- und/oder reibschlüssig mit den Trageelementen 7 der Tragplatte 6 verbunden sind. Im gezeigten verbundenen Zustand kann der Bewässerungsschlauch 8 zur Wasserversorgung des Pflanzenmaterials 2 genutzt werden.

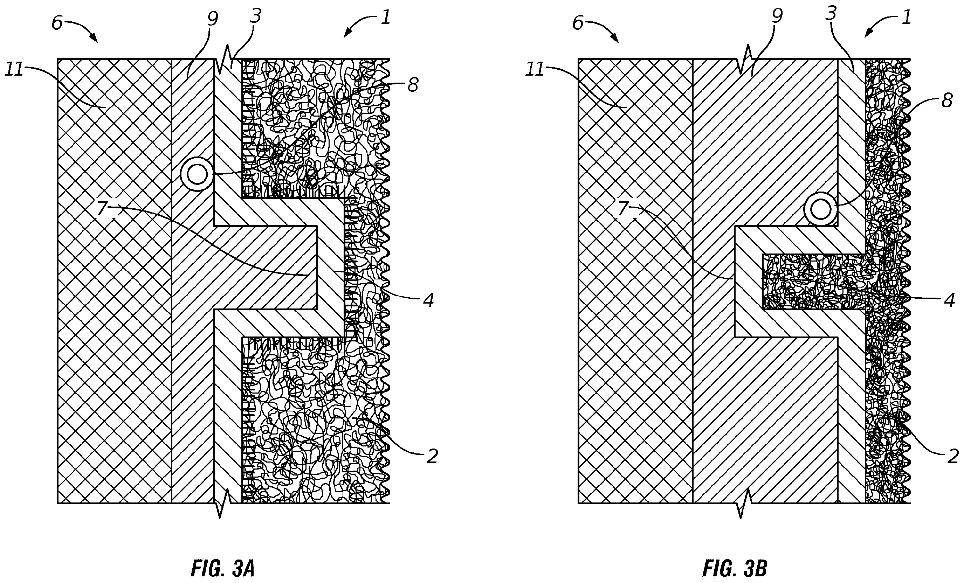

Fig. 3A und 3B zeigen erfindungsgemäße Fassadensysteme mit unterschiedlichen Ausführungsformen der Halteelemente 4 und der Trageelemente 7. In der Ausführungsform gemäß Fig. 3A ist das Halteelement 4 der Fassadenplatte 1 durch eine Vertiefung am Formkörper 3 gebildet. Das Trageelement 7 ist durch eine Erhebung an der Tragplatte 6 gebildet, welche auf das Halteelement 4 abgestimmt ist, sodass eine form- bzw. reibschlüssige Verbindung ermöglicht wird. In der Ausführungsform gemäß Fig. 3B ist hingegen das Halteelement 4 durch eine Erhebung am Formkörper 3 und das Trageelement 7 durch eine Vertiefung an der Tragplatte 6 gebildet, wodurch wiederum eine form- bzw. reibschlüssige Verbindung möglich wird.

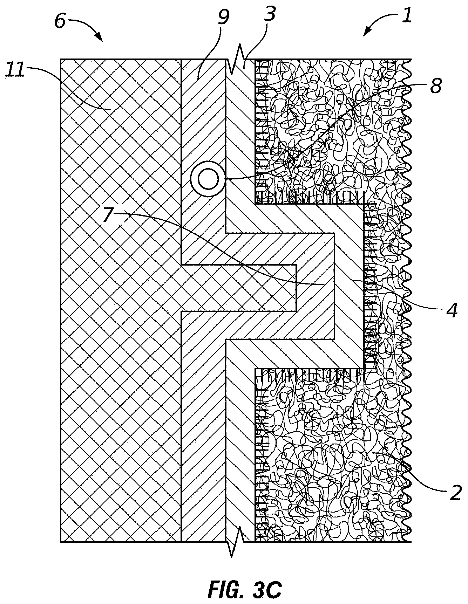

Fig. 3C zeigt eine weitere Ausführungsform, in welcher das Trageelement 7 durch eine Erhebung an der Tragplatte 6 gebildet ist. In dieser Ausführungsform weist die Wärmedämmschicht 11 ebenfalls ein Trageelement auf, welches durch eine Erhebung an der Wärmedämmschicht 11 gebildet ist. Dieses Trageelement der Wärmedämmschicht 11 ist lösbar mit einem Halteelement der Schicht 9 aus Kunststoff verbunden, welches Halteelement durch eine Vertiefung an der Schicht 9 aus Kunststoff gebildet ist. Das Trageelement 7 der Tragplatte 6 ist wiederum durch eine Erhebung an der Schicht 9 aus Kunststoff gebildet. Die gezeigte Ausführungsform der Tragplatte 6 ermöglicht eine besonders einfache Herstellung, da die Schicht 9 aus Kunststoff einfach auf die Wärmedämmschicht 11 aufgesteckt werden kann, um die Tragplatte 6 aufweisend das Trageelement 7 zu erhalten.

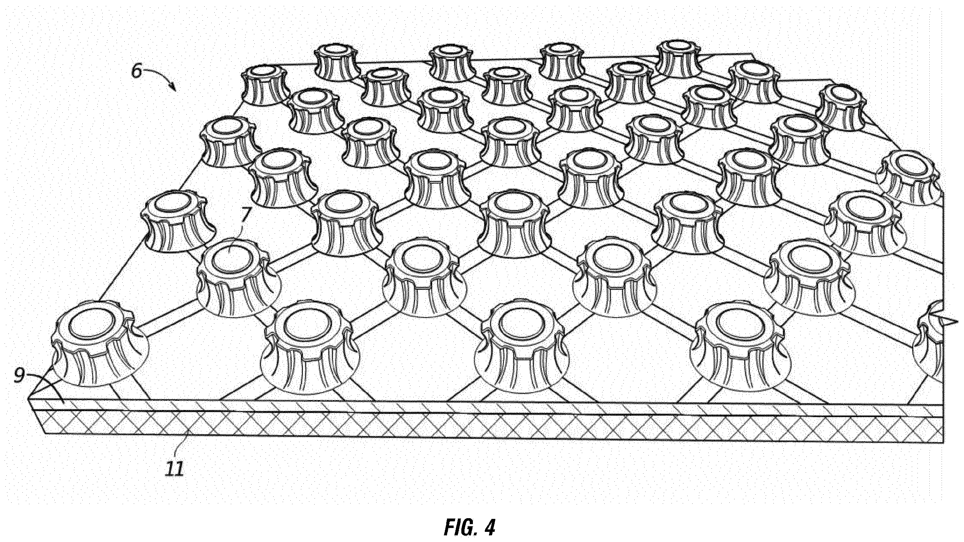

Fig. 4 zeigt eine perspektivische Ansicht einer Ausführungsform der Tragplatte 6. Die Tragplatte 6 weist eine Wärmedämmschicht 11 als Rückseite sowie eine Schicht 9 aus Kunststoff als Vorderseite auf. An der Schicht 9 sind Trageelemente 7 als höckerförmige Erhebungen ausgebildet. Die Trageelement 7 bilden ein Tragprofil, welches eine lösbare Verbindung mit einem entsprechenden Halteprofil einer Fassadenplatte (nicht gezeigt) ermöglicht. Ein Bewässerungsschlauch (nicht gezeigt) kann zwischen den Trageelementen 7 verlegt werden, um die erfindungsgemäße Unterkonstruktion zu bilden.

## Patentansprüche

1. Fassadenplatte (1) zur Fassadenbegrünung, aufweisend keimfähiges und/oder gekeimtes Pflanzenmaterial (2), **dadurch gekennzeichnet, dass** das keimfähige und/oder gekeimte Pflanzenmaterial (2) auf und/oder in einem vorzugsweise plattenförmigen Formkörper (3) vorliegt, wobei der Formkörper (3) im Wesentlichen aus kompostierbarem Material besteht und zumindest ein Halteelement (4) zur lösbaren Anbringung an eine mit einer Gebäudewand verbindbare Unterkonstruktion (5) aufweist.

2. Fassadenplatte (1) gemäß Anspruch 1, **dadurch gekennzeichnet, dass** das kompostierbare Material Faserstoffmaterial, vorzugsweise Sekundärfaserstoffmaterial, insbesondere Altpapierstoffmaterial, am meisten bevorzugt geformte Pulpe enthält.

3. Fassadenplatte (1) gemäß Anspruch 1 oder 2, **dadurch gekennzeichnet, dass** das zumindest eine Halteelement (4) einstückig mit dem Formkörper (3) ausgebildet ist.

4. Fassadenplatte (1) gemäß einem der Ansprüche 1 bis 3, **dadurch gekennzeichnet, dass** das zumindest eine Halteelement (4) durch eine Vertiefung oder Erhebung am Formkörper (3) gebildet ist, vorzugsweise wobei der Formkörper (3) zumindest zwei, vorzugsweise zumindest vier, noch mehr bevorzugt zumindest acht Halteelemente (4) aufweist.

5. Fassadenplatte (1) gemäß einem der Ansprüche 1 bis 4, **dadurch gekennzeichnet, dass** das kompostierbare Material Zuschlagsstoffe enthält, vorzugsweise ausgewählt aus der Gruppe bestehend aus Pflanzennährstoffen, wasserspeichernden und/oder wasserregulierenden Medien, Flammschutzmittel und festigkeitserhöhenden Füllstoffen.

6. Fassadenplatte (1) gemäß einem der Ansprüche 1 bis 5, **dadurch gekennzeichnet, dass** das kompostierbare Material festigkeitserhöhende Füllstoffe enthält, vorzugsweise natürliche Silikate, insbesondere Zeolith, Bentonit, Kaolin, oder Tone; oder andere natürliche Mineralien, insbesondere Gips, Apatit, oder organische Fasern, insbesondere Baumwolle, Hanf, oder Jute; vorzugsweise wobei die festigkeitserhöhenden Füllstoffe eine Gitterstruktur bilden, insbesondere eine quadratische oder wabenförmig hexagonale Gitterstruktur, in welche das übrige kompostierbare Material eingebettet ist.

7. Fassadenplatte (1) gemäß einem der Ansprüche 1 bis 6, **dadurch gekennzeichnet, dass** das keimfähige und/oder gekeimte Pflanzenmaterial (2) in das kompostierbare Material eingebettet ist.

8. Fassadenplatte (1) gemäß einem der Ansprüche 1 bis 7, **dadurch gekennzeichnet, dass** das keimfähige und/oder gekeimte Pflanzenmaterial (2) auf die Oberfläche des Formkörpers (3) aufgebracht, vorzugsweise aufgesprüht oder auflackiert, ist.

9. Fassadenplatte (1) gemäß einem der Ansprüche 1 bis 8, **dadurch gekennzeichnet, dass** das keimfähige und/oder gekeimte Pflanzenmaterial (2) ein Moos, einen Farn, und/oder ein Mastkraut, insbesondere ein Moos und einen Farn, aufweist.

10. Unterkonstruktion (5) zum Anbringen von Fassadenplatten, aufweisend eine Tragplatte (6) mit einer Rückseite zur Befestigung an eine Gebäudewand (10) und einer Vorderseite aufweisend zumindest ein Trageelement (7) zur lösbaren Anbringung einer Fassadenplatte, **dadurch gekennzeichnet, dass** an der Vorderseite zumindest ein Bewässerungsschlauch (8) zur Wasserversorgung einer Fassadenplatte angebracht ist.

11. Unterkonstruktion (5) gemäß Anspruch 10, **dadurch gekennzeichnet, dass** die Tragplatte (6) eine Schicht (9) aus Kunststoff, vorzugsweise aus einem wasserdichten Kunststoff, besonders bevorzugt aus Polystyrol (PS), insbesondere aus recycliertem PS aufweist, vorzugsweise wobei die Schicht aus Kunststoff die Vorderseite der Tragplatte (6) bildet.

12. Unterkonstruktion (5) gemäß Anspruch 10 oder 11, **dadurch gekennzeichnet, dass** die Tragplatte (6) eine Wärmedämmschicht (11) aus expandiertem Polystyrol (EPS) aufweist, vorzugsweise wobei die Wärmedämmschicht (11) die Rückseite der Tragplatte (6) bildet.

13. Unterkonstruktion (5) gemäß einem der Ansprüche 10 bis 12, **dadurch gekennzeichnet, dass** die Unterkonstruktion (5) zumindest einen Feuchtigkeitssensor und/oder einen Temperatursensor sowie vorzugsweise eine Regeleinheit zur Regulierung des Wasserzuflusses durch den Bewässerungsschlauch (8) aufweist.

14. Fassadensystem zur Fassadenbegrünung, umfassend zumindest eine Fassadenplatte (1) gemäß einem der Ansprüche 1 bis 9 und zumindest eine Unterkonstruktion (5) gemäß einem der Ansprüche 10 bis 13.

15. Gebäude mit Fassadenbegrünung, aufweisend zumindest eine mit einer Wand (10) des Gebäudes verbundene Unterkonstruktion (5) gemäß einem der Ansprüche 10 bis 13 und zumindest eine an der Unterkonstruktion (5) angebrachten Fassadenplatte (1) gemäß einem der Ansprüche 1 bis 9.
